# FASCICULE DE BREVET EUROPEEN

(11) **EP 3 409 998 B1**
(45) Date de publication et mention de la délivrance du brevet: **29.01.2020**
(21) Numéro de dépôt: 18167428.4
(22) Date de dépôt: 16.04.2018
(51) Int. Cl.: F17C 13/04

(54) **ROBINET, STOCKAGE ET STATION DE REMPLISSAGE**
HAHN, TANK UND FÜLLSTATION
VALVE, STORE AND FILLING STATION

(30) Priorité: 01.06.2017 FR 1754870
(43) Date de publication de la demande: 05.12.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LACOMBE, Yves, 38113 Veurey-Voroize (FR); OTT, Thierry, 91800 Brunoy (FR); ZANOTO, Adrien, 75008 Paris (FR)
(74) Mandataire: De Cuenca, Emmanuel Jaime

(56) Documents cités:
- WO-A1-2016/020552
- FR-A1- 2 706 051
- FR-A1- 2 749 641
- FR-A1- 3 018 580

## Description

L'invention concerne un robinet, un stockage de gaz sous pression et une station de remplissage correspondante.

FR3018580A1 divulgue un tel robinet.

L'invention concerne plus particulièrement un robinet pour stockage de fluide sous pression, notamment d'hydrogène gazeux, comprenant un corps abritant un circuit de fluide comprenant une première extrémité destinée à être raccordé avec l'orifice d'au moins un stockage de fluide sous pression, au moins une seconde extrémité de soutirage destinée être raccordée à un circuit récepteur pour permettre la fourniture de fluide soutiré du stockage via le circuit, au moins une troisième extrémité de remplissage destinée à être raccordée à une source de gaz sous pression pour permettre le remplissage du stockage via le circuit, les seconde et troisième extrémités étant reliées à la première extrémité via respectivement une branche de soutirage du circuit et une branche de remplissage du circuit, les branches de soutirage et de remplissage étant raccordées en parallèles à la première extrémité du circuit et comprenant chacune un ensemble de vanne(s) et/ou clapets, le circuit comportant deux extrémités de soutirage distinctes reliées fluidiquement à la branche de soutirage et débouchant sur le corps du robinet au niveau respectivement de deux orifices distincts.

L'invention concerne en particulier un robinet à haute pression, notamment pour les applications hydrogène (réservoir(s) et stations mobiles ou fixes).

De nombreux robinets et stations correspondantes on été proposés pour ces applications. Ces solutions connues ne permettent cependant pas d'optimiser les performances de remplissage et de distribution tout en offrant une modularité des usages.

En particulier, les solutions connues ne permettent pas de garantir à la fois une grande modularité des stockages utilisés dans les stations de remplissage (utilisés notamment par équilibrage de pression et/ou comme source d'un compresseur).

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que le les deux extrémités de soutirage distinctes sont situées en aval de l'ensemble de vanne(s) et/ou clapet(s) de la branche de soutirage et communiquent fluidiquement entre elles et avec la branche de soutirage, c'est-à-dire que le gaz soutiré par l'une ou l'autre des extrémités a transité par le même ensemble de vanne(s) et/ou clapet(s) de la branche de soutirage.

Par ailleurs, des modes de réalisation de l'invention peuvent comporter l'une ou plusieurs des caractéristiques suivantes :
- les deux extrémités de soutirage distinctes communiquent fluidiquement entre elles et avec la branche de soutirage,
- le circuit comporte deux extrémités de remplissage distinctes reliées fluidiquement à la branche de remplissage et débouchant sur le corps du robinet au niveau respectivement de deux orifices distincts,
- les deux extrémités de remplissage distinctes communiquent fluidiquement entre elles et avec la branche de remplissage,
- les extrémités de soutirage et/ou les extrémités de remplissage débouchent sur le corps au niveau de raccord fluidiques respectifs montée sur le corps,
- les branches de soutirage et de remplissage comprennent chacune une vanne respective, notamment une vanne pilotée, en série avec un clapet unidirectionnel respectif, notamment un clapet anti-retour,
- le circuit comporte une première vanne d'isolation située entre d'une part, les deux branches de soutirage et de remplissage et, d'autre part, la première extrémité du circuit,
- le circuit comporte au moins un organe de vidange de sécurité configuré pour libérer un passage d'évacuation du gaz entre la première extrémité du circuit et au moins un orifice d'évacuation débouchant sur corps lorsque l'organe de vidange est soumis à une température et/ou une pression supérieure à un seuil déterminé,
- le circuit comprend une conduite de purge ayant une extrémité amont reliée dans la portion située entre la première vanne d'isolation et les deux branches de soutirage et de remplissage et une extrémité aval reliée à le ou les orifices d'évacuation de l'organe de vidange, la conduite de purge comprenant une seconde vanne d'isolation,
- le circuit comporte au moins un parmi : un capteur de pression, un capteur de température,
- la station comprend plusieurs stockages de gaz sous pression de ce type reliés à la conduite de transfert, au moins une partie des stockages étant reliés en parallèle à la conduite de transfert via leurs extrémités de soutirage,
- le circuit du robinet comporte un capteur de pression situé entre la première vanne d'isolation et la première extrémité du circuit et/ou entre la première vanne d'isolation et la seconde vanne d'isolation,
- le circuit du robinet comporte au moins un capteur de pression situé entre la première vanne d'isolation et la première extrémité du circuit,

L'invention concerne également un ou des stockage(s) de gaz sous pression comprenant un orifice raccordé à un robinet selon l'une quelconque des

L'invention concerne également une station de remplissage de réservoir(s) de gaz sous pression comprenant au moins un stockage de gaz sous pression relié à au moins une conduite de transfert destinée à être raccordée à un réservoir de gaz sous pression à remplir pour assurer un transfert de gaz du stockage vers le réservoir, la conduite de transfert étant raccordée à une des extrémités de soutirage du corps du robinet du stockage.

Selon d'autres particularités possibles
- l'une des extrémités de remplissage du corps du robinet du stockage est reliée à une source de gaz sous pression comprenant au moins l'un parmi : un compresseur, un réserve de gaz et/ou de liquide,
- au moins une partie des stockages sont reliés en parallèle à la source de gaz sous pression via leurs extrémités de remplissage,
- chaque robinet comporte deux orifices d'évacuation débouchant sur corps pour évacuer le gaz libérer par l'organe de vidange, les stockages étant reliés en parallèle à une conduite d'évacuation de gaz via leurs orifices d'évacuation,
- le au moins un stockage contient du gaz à une pression comprise entre 50 et 1100bar,
- la station comprend un ensemble de plusieurs stockages de gaz sous pression reliés en parallèle à la conduite de transfert, à la une source de gaz sous pression et à la conduite d'évacuation, dans lesquels, un premier stockage de gaz a une extrémité de soutirage directement reliée à la conduite de transfert tandis que l'autre extrémité de soutirage est reliée à une extrémité de soutirage du stockage adjacent, le premier stockage a une extrémité de remplissage directement reliée à la source de gaz sous pression tandis que l'autre extrémité de remplissage est reliée à une extrémité de remplissage du stockage adjacent, les stockage de gaz suivants ayant leurs deux extrémités de soutirage reliées respectivement aux extrémités de soutirage des deux stockages adjacents, et leurs deux extrémités de remplissage reliées respectivement aux extrémités de remplissage des deux stockages adjacent, le dernier stockage de gaz l'ensemble ayant une extrémité de soutirage reliée à l'extrémité de soutirage de l'avant-dernier stockage adjacent et l'autre l'extrémité de soutirage obturée par un bouchon, le dernier le dernier stockage de gaz l'ensemble ayant une extrémité de remplissage reliée à l'extrémité de remplissage de l'avant-dernier stockage adjacent et l'autre l'extrémité de remplissage obturée par un bouchon.

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue schématique et partielle illustrant un exemple de stockage comprenant un robinet selon un exemple de réalisation de l'invention,
- la figure 2 représente une vue schématique et partielle illustrant un exemple de station de remplissage comprenant un ensemble de stockages selon l'invention,
- la figure 3 représente une vue schématique et partielle illustrant un autre exemple de station de remplissage comprenant un ensemble de stockages selon l'invention.

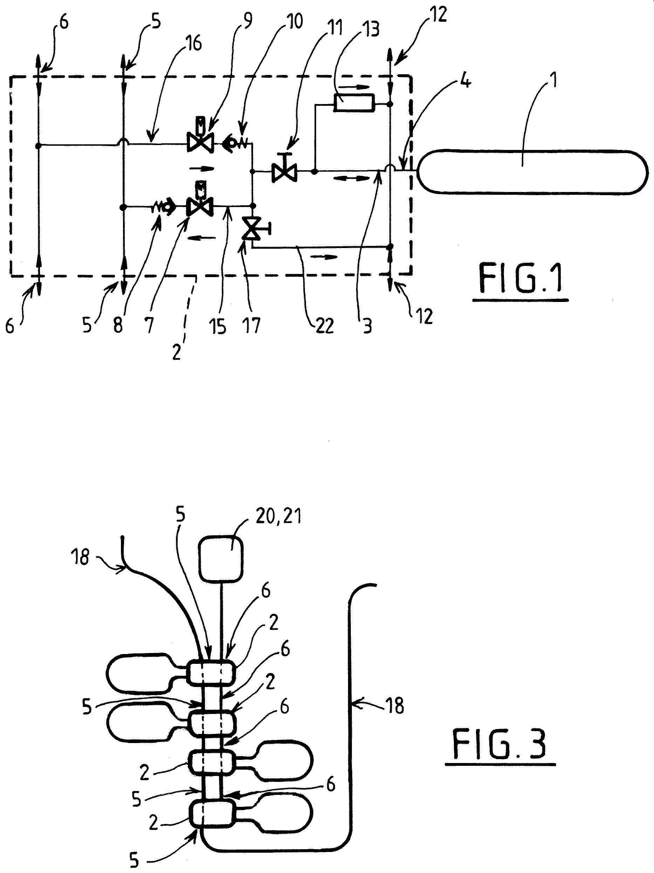

Le robinet illustré à la figure 1 est raccordé à l'orifice (de préférence unique) d'un stockage de fluide sous pression, notamment un stockage d'hydrogène gazeux sous pression, par exemple jusqu'à 1100bar (structure de stockage métallique ou composite par exemple).

Le robinet comprend un corps 2 abritant un circuit 3 de fluide comprenant une première extrémité 4 raccordé à l'orifice du stockage 1. Par exemple, la première extrémité 4 du robinet débouche au niveau d'une portion filetée destinée à être vissée dans l'orifice taraudé du stockage 1. Bien entendu, en variante, cette première extrémité pourrait être reliée à un ensemble de stockages distincts (un cadre de bouteilles par exemple). C'est-à-dire que le robinet serait commun à plusieurs stockages et relié à ces derniers par une circuiterie.

Le circuit 3 de fluide du robinet comprend deux extrémités 5 de soutirage destinée être raccordée à un circuit récepteur pour permettre la fourniture de fluide soutiré du stockage 1. Ces deux extrémités 5 de soutirage distinctes débouchent sur le corps 2 du robinet via des orifices respectifs.

Les deux extrémités 5 de soutirage distinctes débouchent sur le corps 2 du robinet et sont reliées fluidiquement à la branche 15 de soutirage, c'est-à-dire que les deux extrémités 5 de soutirage distinctes peuvent communiquer fluidiquement entre elles et avec la branche 15 de soutirage.

Les deux extrémités 5 de soutirage sont situées en aval de l'ensemble de vanne(s) et/ou clapet(s) de la branche 15 de soutirage. Les deux extrémités sont raccordées en parallèle au reste de la branche 15 de soutirage. C'est-à-dire que, en aval des vanne(s) et/ou clapets de la branche 15 de soutirage, l'extrémité aval de la branche 5 de soutirage se subdivise en deux vers ces deux extrémités 5 (ou sorties) sur le corps du robinet. De plus, le gaz peut transiter d'une extrémité 5 de soutirage à l'autre sans passer par l'ensemble de vanne(s) et/ou clapets de la branche 15 de soutirage. C'est-à-dire que le gaz soutiré par l'une ou l'autre des extrémités 5 de soutirage a transité par les mêmes clapet(s) et/ou vanne(s) de la branche 15 de soutirage. Le terme « aval » fait référence au sens d'écoulement du gaz dans la branche 15 de soutirage de l'amont (qui est le stockage) vers l'aval (qui est l'une ou l'autre des extrémités 5).

Ces extrémités 5 de soutirage débouchent chacune sur le corps 2 par exemple au niveau d'un raccord fluidique standard ou non.

Le circuit 3 comprend également deux extrémités 6 de remplissage destinées à être raccordée à une source de gaz sous pression pour permettre le remplissage du stockage 1. Comme précédemment, ces deux extrémités 6 de remplissage peuvent déboucher sur le corps 2 (par exemple au niveau de raccords fluidiques respectifs standards ou non).

Les deux extrémités 6 de remplissage distinctes débouchent sur le corps 2 du robinet et reliées fluidiquement à la branche 16 de remplissage. C'est-à-dire que les deux extrémités 6 de remplissage distinctes peuvent communiquer fluidiquement entre elles et avec la branche 16 de remplissage.

Les secondes 5 (soutirage) et troisièmes 6 (remplissage) extrémités sont ainsi distincte et reliées à la première extrémité 4 via des branches respectives du circuit 3: respectivement une branche 15 de soutirage et une branche 16 de remplissage. C'est-à-dire que, pour le remplissage et le soutirage du stockage 1, le fluide emprunte des orifices du robinet distincts (deux entrées et deux sorties indépendantes) avant d'emprunter une portion de circuit commune (les deux branches 15, 16 se raccordant avant ou au niveau de la première extrémité 4 du circuit 3).

C'est-à-dire que les branches de soutirage 15 et de remplissage 16 sont raccordées en parallèles à la première extrémité 4. Ces branches de soutirage 15 et de remplissage 16 comprennent chacune un ensemble de vanne(s) et/ou clapets. Plus précisément, chaque branches de soutirage 15 et de remplissage 16 comprend une vanne 7, 9 respective en série avec un clapet 8, 10 unidirectionnel respectif.

Chaque vanne 7, 9 est par exemple une vanne piloté, notamment une vanne pneumatique. Bien entendu tout autre type de vanne peut être envisagé (manuelle, électrovanne, hydraulique....).

Chaque clapet 8, 10 unidirectionnel respectif est par exemple un clapet anti-retour (obturateur mobile associé avec un organe de rappel qui ne peut s'ouvrir par différentiel de pression que dans un sens (sens de remplissage ou de soutirage respectivement).

Comme détaillé ci-après, cette architecture à double entrées 6 et doubles sorties 5 permet d'intégrer un tel stockage 1 à un circuit d'une station de remplissage en garantissant une bonne étanchéité en cas d'utilisation bidirectionnelle (remplissage/soutirage du stockage 1). En particulier, cette architecture permet de simplifier les raccordements et le dimensionnement de la station.

Ceci permet également de décorréler la pressurisation de la dépressurisation du stockage 1. Ceci permet également de simplifier le montage et la maintenance d'un tel stockage 1 dans un circuit qui l'intègre.

Cette architecture permet au robinet d'avoir une pression de service élevée, par exemple 1100 bar.

Le circuit 3 du robinet comporte également de préférence une première vanne 11 d'isolation située entre d'une part, les deux branches 15, 16 de soutirage et de remplissage et, d'autre part, la première extrémité 4 du circuit 3. C'est-à-dire que la première vanne 11 d'isolation est située sur la portion du circuit 3 qui est commune aux opérations de remplissage/soutirage du stockage 1. Cette première vanne 1 d'isolation peut être manuelle et/ou pilotée.

Le robinet comporte également de préférence un organe 13 de vidange de sécurité configuré pour libérer un passage d'évacuation du gaz du stockage 1 lorsqu'il est soumis à une température et/ou une pression supérieure à un seuil déterminé. Cet organe 13 optionnel est par exemple un fusible qui libère un passage (normalement obturé) entre la première extrémité 4 du circuit 3 et au moins un orifice 12 d'évacuation débouchant sur corps 2 (par exemple deux orifices 12 d'évacuation tel que représenté).

Le circuit 3 peut comprendre également une conduite 22 de purge ayant une extrémité amont reliée entre la première vanne 11 d'isolation et les deux branches 15, 16 de soutirage et de remplissage et une extrémité aval reliée à le ou les orifices 12 d'évacuation de l'organe 13 de vidange. Cette conduite 22 de purge comprend par exemple une seconde vanne 17 d'isolation (manuelle et/ou pilotée). L'ouverture de la seconde vanne 17 d'isolation permet ainsi d'évacuer par le ou les orifices 12 d'évacuation le gaz sous pression situé entre la première vanne 11 d'isolation et les deux branches 15, 16 de remplissage/soutirage. Le ou les orifices 12 d'évacuation peuvent être reliés à l'atmosphère et/ou à un volume de récupération du gaz. Cette conduite de purge peut être utilisée pour vider le stockage.

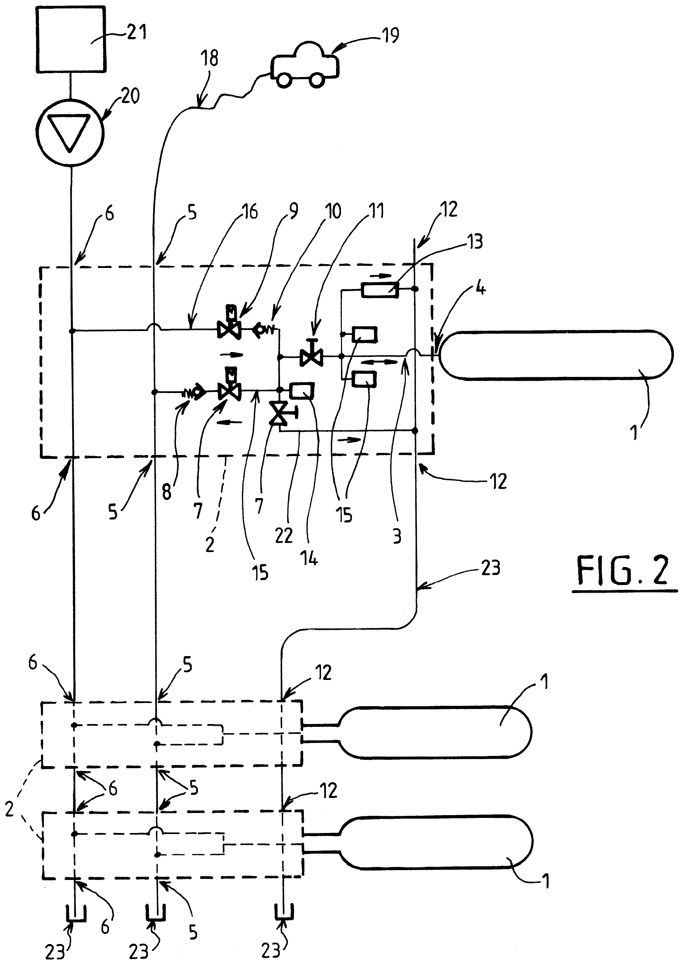

Comme illustré à la figure 2, le circuit 3 peut comporter également au moins un parmi : un capteur 14 de pression, un capteur 15 de température. Par exemple, le circuit 3 du robinet peut comporter un capteur 14 de pression situé entre la première vanne 11 d'isolation et la première extrémité 4 du circuit 3, par exemple entre la première vanne 11 d'isolation et la seconde vanne 17 d'isolation.

De même, le circuit 3 du robinet peut comporter au moins un capteur 15 de pression situé entre la première vanne 11 d'isolation et la première extrémité 4 du circuit 3.

Cette architecture de robinet permet d'utiliser de façon avantageuse un tel stockage 1 dans une installation de gaz, notamment dans une station de remplissage de réservoir(s) notamment d'hydrogène. En particulier (cf. figure 2), une troisième extrémité 6 de remplissage du corps 2 du robinet du stockage 1 peut être reliée à une source 20, 21 de gaz sous pression (comprenant par exemple au moins l'un parmi : un compresseur 20, un réserve 21 de gaz et/ou de liquide...) pour permettre le remplissage du stockage 1 par le gaz fourni par la source 20, 21.

Comme illustré à la figure 2, une station de remplissage de réservoir(s) 19 peut notamment utiliser plusieurs stockages 1 conformes à la figure 1 comme stockages tampon utilisés pour transférer du gaz dans un réservoir 19 par équilibrage de pression (en cascade notamment) et/ou comme source de gaz pour un compresseur de remplissage.

La station illustrée à la figure 2 comprenant plusieurs stockages 1 (trois dans cet exemple, mais pourraient être au nombre de deux ou plus de trois). Les stockages 1 sont reliés en parallèle à la conduite 18 de transfert via la au moins une seconde extrémité 5 de soutirage du robinet de chacun des stockages 1.

Plus précisément, un premier stockage 1 (à l'extrémité supérieure de la figure 2) comporte une seconde 5 extrémité de soutirage qui est reliée directement au(x) réservoir(s) 19 à remplir (via la conduite 18). L'autre extrémité 5 de remplissage de ce premier stockage 1 est reliée à une extrémité 5 de soutirage du second stockage 1 adjacent. L'autre extrémité 5 de remplissage de ce second stockage 1 est reliée à une extrémité 5 de soutirage du troisième stockage 1 adjacent.

Bien entendu, les extrémités 5 (raccords) de soutirage de tous les stockages 1 ne sont pas nécessairement tous connectées/reliées entre eux à une même conduite 18 de soutirage, Ceci permet d'avoir un distributeur multiple de gaz avec une même source de gaz. Par exemple, l'installation peut comporter deux (ou plus) groupes de stockages reliés respectivement à deux (ou plus) conduites 18 de transfert distinctes. Tous ces stockages 1 peuvent en revanche être reliés à la même source (ou des sources distinctes) via leurs extrémités 6 de soutirages. Dans le cas par exemple de quatre stockages 1 reliés à deux conduites 18 de transfert, les extrémités 5 de soutirage de deux stockages 1 peuvent être reliées en parallèle à une première conduite 18 de transfert tandis que les extrémités 5 de soutirage des deux autres stockages 1 sont reliées en parallèle à l'autre conduite 18 de transfert. Les quatre stockages peuvent être reliés à la même source 20, 21 via les extrémités 6 de remplissage. Cf. figure 3.

De même, le premier stockage 1 (à l'extrémité supérieure de la figure 2) comporte une 6 extrémité de remplissage reliée (directement, c'est-à-dire au plus près) à la source 20, 21 de gaz sous pression tandis que l'autre extrémité 6 de remplissage de ce premier stockage 1 est reliée à une extrémité 6 de remplissage du robinet du second stockage 1 adjacent. L'autre 6 de remplissage de ce second stockage 1 est reliée une extrémité 6 de remplissage du robinet du troisième stockage 1.

Enfin les orifices 12 d'évacuation des trois stockages peuvent être reliés à la même conduite 23 de purge.

Ainsi, les extrémités/orifices 5, 6, 12 des robinets des stockages sont raccordés en parallèle respectivement
- à la conduite 18 de transfert et
- à la source 20, 21 de gaz,
- à la conduite 23 de purge.

Comme précédemment, les extrémités de soutirage de tous les réservoirs ne sont pas forcément reliées/connectées toutes entre elles mais peuvent être groupées/reliées à des conduites 18 de transfert distinctes.

Les extrémités/orifices du robinet du dernier stockage 1 (le plus éloigné, en bout de rangée, à l'extrémité inférieure de la figure 2) peuvent être obturés par un système de bouchons 23 par exemple.

Ainsi, chaque robinet associé à son stockage 1 possède un système de double orifices/sorties 5, 6, 12 permettant une double connexion qui simplifie les interconnexions entre les stockages 1 et le reste de la station.

De cette façon, il est relativement aisé de rajouter un stockage 1 en parallèle ou de retirer un stockage à une extrémité de cette rangée de stockages 1. Les coûts liés au raccordement des tels stockages 1 peuvent être minimisés.

Cette architecture permet de remplir un stockage 1 pendant qu'un autre distribue du gaz à un réservoir 22. Ceci permet d'avoir plusieurs bornes de distributions indépendantes de la source (compresseur 20).

Cette architecture permet en particulier d'utiliser les stockages 1 en parallèle selon le principe de la cascade (sans être limité sur le nombre de stockages1) pour optimiser la quantité de gaz stockée dans ces stockages.

Cette architecture limite le nombre de raccord tout en permettant une grande modularité.

Ceci permet notamment une montée graduelle de la capacité journalière de la station. Ceci permet également d'augmenter le nombre d'étape de cascade le cas échéant.

De plus cette architecture permet d'utiliser un ou plusieurs stockages 1 pour remplir un ou plusieurs autres stockages 1 de l'installation (par exemple par équilibrage et le cas échéant à partir de la source 20, 21).

Chaque stockage 1 associé à son robinet permet de remplacer le cas échéant un ensemble de plusieurs stockages selon l'art antérieur tout en simplifiant l'installation et la maintenance. Ceci permet d'optimiser un remplissage par cascade en utilisant 60 à 70% de sa capacité (au lieu de 30% selon les solutions antérieures). Un ou des stockages 1 peuvent être utilisés également pour remplir un ou des autres stockages 1 (le cas échant via un compresseur).

Lorsque le robinet d'un stockage 1 comprend un capteur de pression (et éventuellement un capteur de température) du gaz dans le circuit 3 la quantité de gaz soutirée de chaque stockage 1 (ou remplie) peut être calculée par une équation d'état du gaz (PV=z.n.R.T par exemple).

Ceci peut remplacer ou suppléer une mesure par débitmètre massique.

## Revendications

1. Robinet pour stockage de fluide sous pression, notamment d'hydrogène gazeux, comprenant un corps (2) abritant un circuit (3) de fluide comprenant une première extrémité (4) destinée à être raccordé avec l'orifice d'au moins un stockage (1) de fluide sous pression, au moins une seconde extrémité (5) de soutirage destinée être raccordée à un circuit récepteur pour permettre la fourniture de fluide soutiré du stockage via le circuit (3), au moins une troisième extrémité (6) de remplissage destinée à être raccordée à une source de gaz sous pression pour permettre le remplissage du stockage (1) via le circuit (3), les seconde (5) et troisième (6) extrémités étant reliées à la première extrémité (4) via respectivement une branche (15) de soutirage du circuit (3) et une branche (16) de remplissage du circuit (3), les branches de soutirage (15) et de remplissage (16) étant raccordées en parallèles à la première extrémité (4) du circuit et comprenant chacune un ensemble de vanne(s) et/ou clapets, le circuit (3) comportant deux extrémités (5) de soutirage distinctes reliées fluidiquement à la branche (15) de soutirage et débouchant sur le corps (2) du robinet au niveau respectivement de deux orifices distincts, **caractérisé en ce que** les deux extrémités (5) de soutirage distinctes sont situées en aval de l'ensemble de vanne(s) et/ou clapet(s) de la branche (15) de soutirage et communiquent fluidiquement entre elles et avec la branche (15) de soutirage, c'est-à-dire que le gaz soutiré par l'une ou l'autre des extrémités (5) a transité par le même ensemble de vanne(s) et/ou clapet(s) de la branche (15) de soutirage.

2. Robinet selon la revendication 1, **caractérisé en ce que** le circuit (3) comporte deux extrémités (6) de remplissage distinctes reliées fluidiquement à la branche (16) de remplissage et débouchant sur le corps (2) du robinet au niveau respectivement de deux orifices distincts.

3. Robinet selon la revendication 2, **caractérisé en ce que** les deux extrémités (6) de remplissage distinctes communiquent fluidiquement entre elles et avec la branche (16) de remplissage.

4. Robinet selon la revendication 2 ou 3, **caractérisé en ce que** les extrémités (5) de soutirage et/ou les extrémités (6) de remplissage débouchent sur le corps (2) au niveau de raccord fluidiques respectifs montée sur le corps (2).

5. Robinet selon l'une quelconque des revendications 1 à 4, **caractérisé en ce que** les branches de soutirage (15) et de remplissage (16) comprennent chacune une vanne (7, 9) respective, notamment une vanne pilotée, en série avec un clapet (8, 10) unidirectionnel respectif, notamment un clapet anti-retour.

6. Robinet selon l'une quelconque des revendications 1 à 5, **caractérisé en ce que** le circuit (3) comporte une première vanne (11) d'isolation située entre d'une part, les deux branches (15, 16) de soutirage et de remplissage et, d'autre part, la première extrémité (4) du circuit (3).

7. Robinet selon l'une quelconque des revendications 1 à 6, **caractérisé en ce qu'**il comporte au moins un organe (13) de vidange de sécurité configuré pour libérer un passage d'évacuation du gaz entre la première extrémité (4) du circuit (3) et au moins un orifice (12) d'évacuation débouchant sur corps (2) lorsque l'organe de vidange (13) est soumis à une température et/ou une pression supérieure à un seuil déterminé.

8. Robinet selon les revendications 6 et 7 prises en combinaison, **caractérisé en ce que** le circuit (3) comprend une conduite (22) de purge ayant une extrémité amont reliée dans la portion située entre la première vanne (11) d'isolation et les deux branches (15, 16) de soutirage et de remplissage et une extrémité aval reliée à le ou les orifices (12) d'évacuation de l'organe (13) de vidange, la conduite (22) de purge comprenant une seconde vanne (17) d'isolation.

9. Robinet selon l'une quelconque des revendications 1 à 8, **caractérisé en ce que** le circuit (3) comporte au moins un parmi : un capteur (14) de pression, un capteur (15) de température.

10. Stockage(s) de gaz sous pression comprenant un orifice raccordé à un robinet selon l'une quelconque des revendications 1 à 9.

11. Station de remplissage de réservoir(s) de gaz sous pression comprenant au moins un stockage (1) de gaz sous pression relié à au moins une conduite (18) de transfert destinée à être raccordée à un réservoir (19) de gaz sous pression à remplir pour assurer un transfert de gaz du stockage (1) vers le réservoir (19), **caractérisé en ce que** le stockage (1) est conforme à la revendication 10 et **en ce que** conduite (18) de transfert est raccordée à une des extrémités (5) de soutirage du corps (2) du robinet du stockage (1).

12. Station de remplissage selon la revendication 11, **caractérisée en ce que** l'une des extrémités (6) de remplissage du corps (2) du robinet du stockage (1) est reliée à une source (20, 21) de gaz sous pression comprenant au moins l'un parmi : un compresseur (20), un réserve (21) de gaz et/ou de liquide.

13. Station de remplissage selon la revendication 11 ou 12 comprenant plusieurs stockages (1) de gaz sous pression reliés à la conduite (18) de transfert, **caractérisée** en que lesdits stockages (1) sont conformes à la revendication 10 et en ce qu'au moins une partie des stockages (1) sont reliés en parallèle à la conduite (18) de transfert via leurs extrémités (5) de soutirage.

14. Station de remplissage selon les revendications 12 et 13 prises en combinaison, **caractérisé en ce qu'**au moins une partie des stockages (1) sont reliés en parallèle à la source (20, 21) de gaz sous pression via leurs extrémités (6) de remplissage.

15. Station de remplissage selon l'une quelconque des revendications 11 à 14 **caractérisé en ce que** le stockage (1) est conforme à la revendication 10 et **en ce que** chaque robinet comporte deux orifices (12) d'évacuation débouchant sur corps (2) pour évacuer le gaz libérer par l'organe de vidange (13), et **en ce que** les stockages (1) sont reliés en parallèle à une conduite (23) d'évacuation de gaz via leurs orifices (12) d'évacuation.

## Patentansprüche

1. Schließhahn für einen Druckfluidspeicher, insbesondere von gasförmigem Wasserstoff, umfassend einen Körper (2), in dem ein Fluidkreislauf (3) untergebracht ist, umfassend ein erstes Ende (4), das dazu bestimmt ist, an die Öffnung von mindestens einem Druckfluidspeicher (1) angeschlossen zu werden, mindestens ein zweites Entnahmeende (5), das dazu bestimmt ist, an einen Aufnahmekreislauf angeschlossen zu werden, um die Bereitstellung von Fluid zu ermöglichen, das von dem Speicher über den Kreislauf (3) entnommen wird, mindestens ein drittes Füllende (6), das dazu bestimmt ist, an eine Druckgasquelle angeschlossen zu werden, um die Füllung des Speichers (1) über den Kreislauf (3) zu ermöglichen, wobei das zweite (5) und dritte (6) Ende mit dem ersten Ende (4) jeweils über einen Entnahmezweig (15) des Kreislaufs (3) und einen Füllzweig (16) des Kreislaufs (3) verbunden sind, wobei der Entnahme- (15) und der Füllzweig (16) an das erste Ende (4) des Kreislaufs parallel angeschlossen sind und jeweils eine Anordnung von Ventil(en) und/oder Klappen umfassen, wobei der Kreislauf (3) zwei verschiedene Entnahmeenden (5) umfasst, die fluidisch mit dem Entnahmezweig (15) verbunden sind und in den Körper (2) des Schließhahns jeweils auf Höhe von zwei verschiedenen Öffnungen münden, **dadurch gekennzeichnet, dass** sich die zwei verschiedenen Entnahmeenden (5) stromabwärts von der Anordnung von Ventil(en) und/oder Klappe(n) des Entnahmezweigs (15) befinden und untereinander und mit dem Entnahmezweig (15) fluidisch kommunizieren, das heißt, dass das Gas, das über das eine oder das andere der Enden (5) entnommen wird, über die gleiche Anordnung von Ventil(en) und/oder Klappe(n) des Entnahmezweigs (15) befördert wird.

2. Schließhahn nach Anspruch 1, **dadurch gekennzeichnet, dass** der Kreislauf (3) zwei verschiedene Füllenden (6) umfasst, die mit dem Füllzweig (16) fluidisch verbunden sind und in den Körper (2) des Schließhahns jeweils auf Höhe von zwei verschiedenen Öffnungen münden.

3. Schließhahn nach Anspruch 2, **dadurch gekennzeichnet, dass** die zwei verschiedenen Füllenden (6) untereinander und mit dem Füllzweig (16) fluidisch kommunizieren.

4. Schließhahn nach Anspruch 2 oder 3, **dadurch gekennzeichnet, dass** die Entnahmeenden (5) und/oder die Füllenden (6) auf Höhe von Fluidanschlüssen in den Körper (2) münden, die jeweils am Körper (2) angebracht sind.

5. Schließhahn nach einem der Ansprüche 1 bis 4, **dadurch gekennzeichnet, dass** der Entnahme- (15) und Füllzweig (16) jeweils ein jeweiliges Ventil (7, 9) umfassen, insbesondere ein Pilotventil, in Serie mit einem jeweiligen Einwegventil (8, 10), insbesondere einem Rückschlagventil.

6. Schließhahn nach einem der Ansprüche 1 bis 5, **dadurch gekennzeichnet, dass** der Kreislauf (3) ein erstes Absperrventil (11) umfasst, das sich zwischen einerseits den zwei Entnahme- und Füllzweigen (15, 16) und andererseits dem ersten Ende (4) des Kreislaufs (3) befindet.

7. Schließhahn nach einem der Ansprüche 1 bis 6, **dadurch gekennzeichnet, dass** er mindestens ein Sicherheitsentleerungsorgan (13) umfasst, das ausgestaltet ist, einen Durchlass für einen Gasauslass zwischen dem ersten Ende (4) des Kreislaufs (3) und mindestens einer Auslassöffnung (12), die in den Körper (2) mündet, freizugeben, wenn das Entleerungsorgan (13) einer Temperatur und/oder einem Druck größer als ein bestimmter Grenzwert ausgesetzt ist.

8. Schließhahn nach den Ansprüchen 6 und 7 in Kombination, **dadurch gekennzeichnet, dass** der Kreislauf (3) eine Ablassleitung (22) umfasst, die ein stromaufwärtiges Ende aufweist, das im Abschnitt verbunden ist, der sich zwischen dem ersten Absperrventil (11) und den zwei Entnahme- und Füllzweigen (15, 16) befindet, und ein stromabwärtiges Ende, das mit der oder den Auslassöffnungen (12) des Entleerungsorgans (13) verbunden ist, wobei die Ablassleitung (22) ein zweites Absperrventil (17) umfasst.

9. Schließhahn nach einem der Ansprüche 1 bis 8, **dadurch gekennzeichnet, dass** der Kreislauf (3) mindestens eines umfasst aus: einem Drucksensor (14), einem Temperatursensor (15).

10. Druckgasspeicher, umfassend eine Öffnung, die an einen Schließhahn nach einem der Ansprüche 1 bis 9 angeschlossen ist.

11. Station zur Druckgasbehälterfüllung, umfassend mindestens einen Druckgasspeicher (1), der mit mindestens einer Transferleitung (18) verbunden ist, die dazu bestimmt ist, an einen zu füllenden Druckgasbehälter (19) angeschlossen zu werden, um einen Gastransfer vom Speicher (1) zum Behälter (19) sicherzustellen, **dadurch gekennzeichnet, dass** der Speicher (1) dem Anspruch 10 entspricht und dadurch, dass die Transferleitung (18) an eines der Entnahmeenden (5) des Körpers (2) des Schließhahns des Speichers (1) angeschlossen ist.

12. Füllstation nach Anspruch 11, **dadurch gekennzeichnet, dass** eines des Füllenden (6) des Körpers (2) des Schließhahns des Speichers (1) mit einer Druckgasquelle (20, 21) verbunden ist, umfassend mindestens eines aus: einem Kompressor (20), einem Vorrat (21) an Gas und/oder Flüssigkeit.

13. Füllstation nach Anspruch 11 oder 12, umfassend mehrere Druckgasspeicher (1), die mit der Transferleitung (18) verbunden sind, **dadurch gekennzeichnet, dass** die Speicher (1) dem Anspruch 10 entsprechen und dadurch, dass mindestens ein Teil der Speicher (1) mit der Transferleitung (18) über deren Entnahmeenden (5) parallel verbunden ist.

14. Füllstation nach den Ansprüchen 12 und 13 in Kombination, **dadurch gekennzeichnet, dass** mindestens ein Teil der Speicher (1) mit der Druckgasquelle (20, 21) über deren Füllenden (6) parallel verbunden ist.

15. Füllstation nach einem der Ansprüche 11 bis 14, **dadurch gekennzeichnet, dass** der Speicher (1) dem Anspruch 10 entspricht und dadurch, dass jeder Schließhahn zwei Auslassöffnungen (12), die in den Körper (2) münden, umfasst, um das Gas auszulassen, das vom Entleerungsorgan (13) freigesetzt wird, und dadurch, dass die Speicher (1) mit einer Gasauslassleitung (23) über deren Auslassöffnungen (12) parallel verbunden sind.

## Claims

1. Tap for storing pressurised fluid, in particular hydrogen gas, comprising a body (2) housing a fluid circuit (3) comprising a first end (4) intended to be connected with the orifice of at least one pressurised fluid storage (1), at least one second drawing end (5) intended to be connected to a receiving circuit to make it possible to supply fluid drawn from the storage via the circuit (3), at least one third filling end (6) intended to be connected to a pressurised gas source to make it possible for the filling of the storage (1) via the circuit (3), the second (5) and third (6) ends being connected to the first end (4) via respectively a branch (15) for drawing from the circuit (3) and a branch (16) for filling the circuit (3), the drawing (15) and filling (16) branches being connected in parallel to the first end (4) of the circuit and each comprising a set of valve(s), the circuit (3) comprising two separate drawing ends (5) fluidically connected to the drawing branch (15) and opening onto the body (2) of the tap at the level respectively of two separate orifices, **characterised in that** the two separate drawing ends (5) are situated downstream from the set of valve(s) of the drawing branch (15) and fluidically communicate together and with the drawing branch (15), i.e. that the gas drawn through one or the other of the ends (5) has passed through the same set of valve(s) of the drawing branch (15).

2. Tap according to claim 1, **characterised in that** the circuit (3) comprises two separate filling ends (6) fluidically connected to the filling branch (16) and opening onto the body (2) of the tap at the level respectively of two separate orifices.

3. Tap according to claim 2, **characterised in that** the two separate filling ends (6) fluidically communicate together and with the filling branch (16).

4. Tap according to claim 2 or 3, **characterised in that** the drawing ends (5) and/or the filling ends (6) open onto the body (2) at the level of respective fluidic connector mounted on the body (2).

5. Tap according to any one of claims 1 to 4, **characterised in that** the drawing (15) and filling (16) branches each comprise a respective valve (7, 9), in particular a controlled valve, in series with a respective one-directional valve (8, 10), in particular a non-return valve.

6. Tap according to any one of claims 1 to 5, **characterised in that** the circuit (3) comprises a first isolation valve (11) situated between, on the one hand, the two drawing and filling branches (15, 16) and, on the other hand, the first end (4) of the circuit (3).

7. Tap according to any one of claims 1 to 6, **characterised in that** it comprises at least one safety draining member (13) configured to release a passage for discharging the gas between the first end (4) of the circuit (3) and at least one discharge orifice (12) opening onto the body (2) when the draining member (13) is subjected to a temperature and/or a pressure greater than a determined threshold.

8. Tap according to claims 6 and 7 taken in combination, **characterised in that** the circuit (3) comprises a ventilation pipe (22) having an upstream end connected in the portion situated between the first isolation valve (11) and the two drawing and filling branches (15, 16) and a downstream end connected to the discharge orifice(s) (12) of the draining member (13), the ventilation pipe (22) comprising a second isolation valve (17).

9. Tap according to any one of claims 1 to 8, **characterised in that** the circuit (3) comprises at least one from among: a pressure sensor (14), a temperature sensor (15).

10. Pressurised gas storage(s) comprising an orifice connected to a tap according to any one of claims 1 to 9.

11. Pressurised gas tank filling station comprising at least one pressurised gas storage (1) connected to at least one transfer pipe (18) intended to be connected to a pressurised gas tank (19) to be filled to ensure a gas transfer of the storage (1) towards the tank (19), **characterised in that** the storage (1) is according to claim 10, and **in that** the transfer pipe (18) is connected to one of the drawing ends (5) of the body (2) of the tap of the storage (1).

12. Filling station according to claim 11, **characterised in that** one of the filling ends (6) of the body (2) of the tap of the storage (1) is connected to a pressurised gas source (20, 21) comprising at least one from among: a compressor (20), a gas and/or liquid reserve (21).

13. Filling station according to claim 11 or 12 comprising several pressurised gas storages (1) connected to the transfer pipe (18), **characterised in that** said storage (1) are according to claim 10, and **in that** at least some of the storages (1) are connected in parallel to the transfer pipe (18) via the drawing ends (5) thereof.

14. Filling station according to claims 12 and 13 taken in combination, **characterised in that** at least some of the storages (1) are connected in parallel to the pressurised gas source (20, 21) via the filling ends (6) thereof.

15. Filling station according to any one of claims 11 to 14, **characterised in that** the storage (1) is according to claim 10, and **in that** each tap comprises two discharge orifices (12) opening onto the body (2) to discharge the gas released by the draining member (13), and **in that** the storages (1) are connected in parallel to a gas discharge pipe (23) via the discharge orifices (12) thereof.
